# EUROPEAN PATENT APPLICATION

(11) **EP 1 865 371 A2**
(43) Date of publication of application: **12.12.2007**
(21) Application number: 07010191.0
(22) Date of filing: 23.05.2007
(51) Int. Cl.: G02F 1/1362

(54) **Liquid crystal display panel and method of manufacturing the same**

(30) Priority: 07.06.2006 KR 20060050797
(71) Applicant: Samsung Electronics Co., Ltd., Yeongtong-gu Suwon-city, Gyeonggi-do 442-742 (KR)
(72) Inventor: Moh, Sang Moon, Cheonan-si Chungcheongnam-do (KR); Kang, Seung Jae, Cheonan-si Chungcheongnam-do (KR)
(74) Representative: Weitzel, Wolfgang

(57) **Abstract**

An exemplary embodiment of a method of manufacturing a liquid crystal display panel according to the present invention comprises forming a storage electrode on a substrate, forming a gate electrode on the substrate, forming a gate insulating layer on the storage electrode and the substrate, wherein the thickness of the gate insulating layer is thinner on the storage electrode than the thickness on the substrate, forming a semiconductor pattern on the gate insulating layer, forming a source electrode on the semiconductor pattern, forming a drain electrode opposing the source electrode on the semiconductor pattern, wherein the drain electrode overlaps the storage electrode to form the storage capacitor, forming a passivation layer on the source and drain electrodes, wherein the passivation layer has a contact hole which exposes the drain electrode, and forming a pixel electrode connected to the drain electrode via the contact hole.

## Description

This application claims priority to Korean Patent Application No. 2006-0050797, filed on June 7, 2006, and all the benefits accruing therefrom under 35 U.S.C. §119, the contents of which in its entirety are herein incorporated by reference.

### BACKGROUND OF THE INVENTION

### 1. Field of the Invention

The present invention relates to a liquid crystal display ("LCD") panel and a method of manufacturing the LCD panel. More particularly, the present invention relates to an LCD panel and a method of manufacturing the LCD panel capable of reducing the generation of an inflection point in a curve of luminance v. response time of the LCD panel by increasing a capacitance of a storage capacitor without reducing an aperture ratio.

### 2. Description of the Related Art

In general, a liquid crystal display ("LCD") device displays images using a plurality of liquid crystal cells arranged in a matrix pattern on a liquid crystal panel to control light transmittance in response to video signals.

A dielectric constant of a liquid crystal molecule in a liquid crystal cell varies according to the direction in which the liquid crystal molecule is aligned. In other words, when a direction of a long axis of the liquid crystal molecule interposed between a pixel electrode and a common electrode is arranged parallel with a substrate, a dielectric constant of the liquid crystal molecule is relatively low. When a direction of a long axis of the liquid crystal molecule is vertically arranged with respect to the substrate, a dielectric constant of the liquid crystal molecule is relatively high.

An amount of charge stored in the liquid crystal cell based on a dielectric constant of the liquid crystal molecule has to be constant according to charge conservation principles (Q (charge) = C (capacitance) x V (voltage)) without an inflow of charges from outside, and therefore a voltage across the liquid crystal molecule is variable. For example, when an image is changed from a black color to a white color, e.g., going from a low degree of light transmittance to a high degree of light transmittance, a dielectric constant of the liquid crystal molecule is reduced and thus a liquid crystal capacitance is also reduced. In order to meet the charge conservation principles, a voltage across the liquid crystal molecule becomes relatively high and the transmittance also becomes correspondingly higher. Further, when an image is changed from a white color to a black color, e.g., going from a high degree of light transmittance to a low degree of light transmittance, a dielectric constant of the liquid crystal molecule is increased and thus a liquid crystal capacitance also increases. In order to meet the charge conservation principles, a voltage across the liquid crystal molecule is relatively reduced and the transmittance is also reduced.

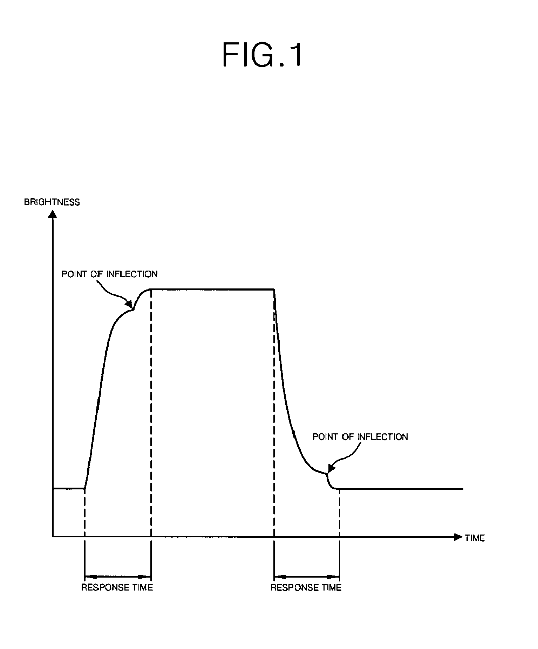

However, when a voltage applied to a liquid crystal varies due to a slow response time resulting from the elasticity and viscosity inherent to the liquid crystal, the transmittance of the liquid crystal cell does not reach a target value corresponding to a target gray level in a single instant, but instead gradually reaches a target value differing from the gray level in a previous frame. As a result, there are several problems generated by an inflection point, as shown in FIG. 1, in a curve of time vs. brightness and a response time is also delayed due to the inflection point.

As the inflection point increases in severity, a dielectric birefringence becomes increasingly large; a cell-gap becomes increasingly small, and a ratio (Cst / Clc) of capacitance of the storage capacitor (Cst) to capacitance of the liquid crystal capacitor (Clc) becomes increasingly small. In order to reduce the inflection point, when the ratio (Cst / Clc) of capacitance of the storage capacitor (Cst) to capacitance of the liquid crystal capacitor (Clc) is increased capacitance of the storage capacitor also has to be increased because capacitance of the liquid crystal capacitor is substantially unchanged in liquid crystal cells of the same size and resolution. When an overlapping area between the electrodes constituting the storage capacitor is increased in order to increase capacitance of the storage capacitor, there is a problem that an aperture ratio is reduced. The aperture ratio is defined as the ratio between the area of each pixel used to display an image and the area of each pixel which is occupied by the transistor required to drive each pixel.

### BRIEF SUMMARY OF THE INVENTION

The present invention provides a liquid crystal display ("LCD") panel and a method of manufacturing the LCD panel capable of reducing generation of an inflection point by increasing capacitance of a storage capacitor, without reducing an aperture ratio thereof.

An exemplary embodiment of a method of manufacturing an exemplary embodiment of the LCD panel according to the present invention comprises; forming a storage electrode on a substrate, forming a gate electrode on the substrate, forming a gate insulating layer on the storage electrode and the substrate, wherein the thickness of the gate insulating layer is thinner on the storage electrode than the thickness of the gate insulating layer on the substrate uncovered by the storage electrode, forming a semiconductor pattern on the gate insulating layer, forming a source electrode on the semiconductor pattern, forming a drain electrode opposing the source electrode on the semiconductor pattern, wherein the drain electrode overlaps the storage electrode to form a storage capacitor, forming a passivation layer on the source electrode and drain electrode, wherein the passivation layer has a contact hole which exposes the drain electrode, and forming a pixel electrode on the passivation layer, wherein the passivation layer is connected to the drain electrode via the contact hole.

A first exemplary embodiment of forming the gate insulating layer and the semiconductor pattern comprises forming the gate insulating layer on the substrate, the gate electrode and the storage electrode, depositing a first silicon layer and a second silicon layer on the gate insulating layer, forming a photoresist pattern which has a different thickness according to its location on the second silicon layer; patterning the first and second silicon layers using the photoresist pattern, etching an upper part of the gate insulating layer on the storage electrode, removing a portion of the photoresist pattern by ashing the photoresist pattern, removing the first and second silicon layers where the relatively thin photoresist pattern is removed, and removing the photoresist pattern.

A second exemplary embodiment of forming the gate insulating layer and the semiconductor pattern comprises; forming the gate insulating layer on the substrate, the gate electrode and the storage electrode, depositing first and second silicon layers on the gate insulating layer, forming a photoresist pattern which has a different thickness according to its location on the second silicon layer, patterning the first and second silicon layers using the photoresist pattern, removing a portion of the photoresist pattern by ashing the photoresist pattern, etching an upper part of the gate insulating layer on the storage electrode, removing the first and second silicon layers where the photoresist pattern is removed, and removing the photoresist pattern.

An exemplary embodiment of an LCD panel according to the present invention comprises a thin film transistor formed on a substrate, a liquid crystal capacitor electrically connected to the thin film transistor, a storage capacitor connected to the liquid crystal capacitor, wherein the storage capacitor maintains a voltage charged in the liquid crystal capacitor, and a dielectric layer formed on the substrate, wherein the thickness of the dielectric layer is thinner between two electrodes of the storage capacitor than the thickness of the dielectric layer on a portion of the substrate uncovered by the storage capacitor.

In the present exemplary embodiment, the dielectric layer is a gate insulating layer disposed between a gate line and a data line.

Specifically, the gate insulating layer has a thickness which is thicker between the gate line and the data line than between the two electrodes of the storage capacitor.

The storage capacitor comprises a storage electrode and a drain electrode with the insulating layer interposed therebetween.

### BRIEF DESCRIPTION OF THE DRAWINGS

The above and other aspects, features and advantages of the present invention will become more apparent by describing in more detail exemplary embodiments thereof with reference to the accompanying drawings, in which:
FIG. 1 is a graph showing a graphical waveform of time vs. brightness in accordance with a conventional liquid crystal display ("LCD") panel;
FIG. 2 is a top plan view showing an exemplary embodiment of a thin film transistor ("TFT") substrate in accordance with the present invention;
FIG. 3 is a cross-sectional view of the exemplary embodiment of a TFT substrate taken along line I-I' of FIG. 2;
FIGS. 4A and 4B are top plan views for illustrating an aperture ratio with respect to capacitance of a storage capacitor in accordance with an exemplary embodiment of the present invention;
FIGS. 5A and 5B are a top plan view and a cross-sectional view, respectively, illustrating an exemplary embodiment of a method of manufacturing an exemplary embodiment of a gate metal pattern of a TFT substrate in accordance with the present invention;
FIGS. 6A and 6B are a top plan view and a cross-sectional view, respectively, illustrating an exemplary embodiment of a method of manufacturing an exemplary embodiment of a gate insulating layer and a semiconductor pattern of a TFT substrate in accordance with the present invention;
FIGS. 7A to 7G are cross-sectional views illustrating an exemplary embodiment of a method of manufacturing the gate insulating layer and the semiconductor pattern of FIG. 5;
FIGS. 8A and 8B are a top plan view and a cross-sectional view, respectively, illustrating an exemplary embodiment of a method of manufacturing source/drain electrodes on the exemplary embodiment of a TFT substrate in accordance with the present invention;
FIGS. 9A and 9B are a top plan view and a cross-sectional view, respectively, illustrating an exemplary embodiment of a method of manufacturing a passivation layer having a contact hole on the TFT substrate in accordance with the present invention; and
FIGS. 10A and 10B are a top plan view and a cross-sectional view, respectively, illustrating an exemplary embodiment of a method of manufacturing a transparent conductive pattern on a TFT substrate in accordance with the present invention.

### DETAILED DESCRIPTION OF THE INVENTION

The present invention now will be described more fully hereinafter with reference to the accompanying drawings, in which exemplary embodiments of the present invention are shown. This invention may, however, be embodied in many different forms and should not be construed as limited to the exemplary embodiments set forth herein. Rather, these exemplary embodiments are provided so that this disclosure will be thorough and complete, and will fully convey the scope of the invention to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention.

The terminology used herein is for the purpose of describing particular exemplary embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another elements as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower", can therefore, encompass both an orientation of "lower" and "upper," depending of the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning which is consistent with their meaning in the context of the relevant art and the present disclosure, and will not be interpreted in an idealized or overly formal sense unless expressly so defined herein.

Exemplary embodiments of the present invention are described herein with reference to cross section illustrations which are schematic illustrations of idealized embodiments of the present invention. As such, variations from the shapes of the illustrations as a result, for example, of manufacturing techniques and/or tolerances, are to be expected. Thus, exemplary embodiments of the present invention should not be construed as limited to the particular shapes of regions illustrated herein but are to include deviations in shapes which result, for example, from manufacturing. For example, a region illustrated or described as flat may, typically, have rough and/or nonlinear features. Moreover, sharp angles which are illustrated may be rounded. Thus, the regions illustrated in the figures are schematic in nature and their shapes are not intended to illustrate the precise shape of a region and are not intended to limit the scope of the present invention.

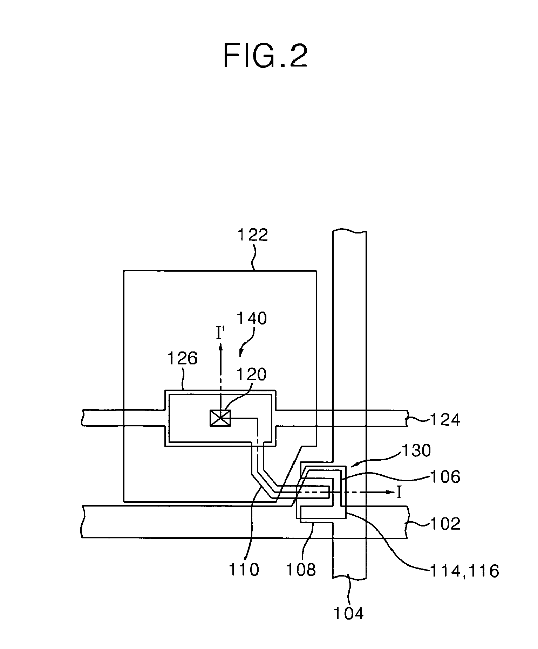

Hereinafter, exemplary embodiments of the present invention will now be described in detail with reference to FIGS. 2 to 10B.

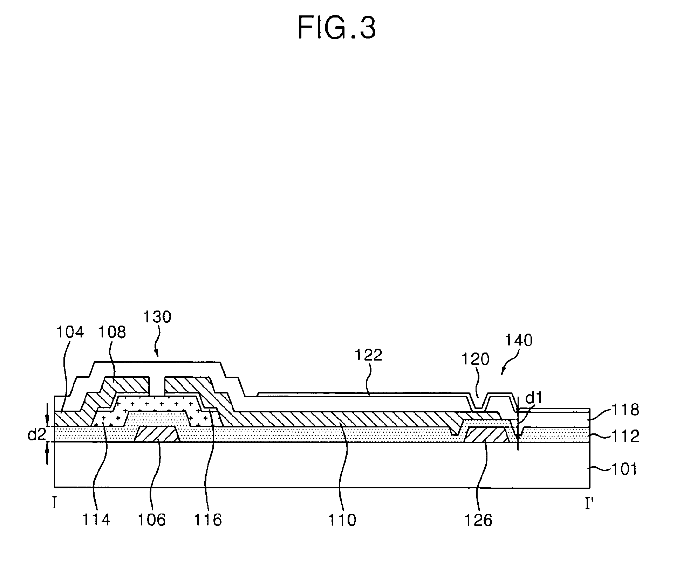

FIG. 2 is a top plan view showing an exemplary embodiment of a thin film transistor ("TFT") substrate in accordance with the present invention and FIG. 3 is a cross-sectional view of the exemplary embodiment of a TFT substrate taken along line I-I' of FIG. 2.

Referring to FIGS. 2 and 3, the TFT substrate comprises a gate line 102 and a data line 104 which intersect each other with a gate insulating layer 112 interposed therebetween, a TFT 130 adjacent to an intersecting area of the gate line 102 and the data line 104, a pixel electrode 122 formed in a pixel area, and a storage capacitor 140 for preventing variation of a pixel voltage charged in the pixel electrode 122.

The gate line 102 delivers a scan signal to a gate electrode 106 of the TFT 130.

The data line 104 intersects the gate line 102 to form a pixel area and delivers a pixel signal to a source electrode 108 of the TFT 130.

The pixel signal is supplied to the data line 104 in response to the scan signal delivered from the gate line 102 and is charged and maintained in the pixel electrode 122 by means of the TFT 130. The TFT 130 comprises the gate electrode 106 which is electrically connected to the gate line 102, the source electrode 108 which is electrically connected to the data line 104, a drain electrode 110 which faces the source electrode 108 and which is electrically connected to the pixel electrode 122, an active layer 114 overlapping the gate electrode 106 with the gate insulating layer 112 interposed and forming a channel between the source electrode 108 and the drain electrode 110, and an ohmic contact layer 116 which is formed on the active layer 114. The ohmic contact layer 116 is formed on the active layer 114 to leave a region of the active layer 114 exposed, e.g., a channel, between the source electrode 108 and the drain electrode 110 above the gate electrode 106. A semiconductor pattern including the active layer 114 and the ohmic contact layer 116 overlaps the data line 104.

The pixel electrode 122 is electrically connected to the drain electrode 110 which is exposed through a contact hole 120 penetrating a passivation layer 118. The pixel electrode 122 is provided with the pixel signal supplied by means of the TFT 130 to generate a voltage difference between a voltage charged in the pixel electrode 122 and a voltage applied to a common electrode formed on a color filter ("CF") substrate (not shown) which is formed opposite the above described TFT substrate with respect to a liquid crystal layer (not shown). Due to the voltage difference, liquid crystal molecules disposed between the TFT substrate and the CF substrate rotate by a dielectric birefringence and control an amount of light transmitted toward the CF substrate.

The storage capacitor 140 stably maintains the pixel voltage charged in the pixel electrode 122 until a new pixel voltage is charged therein. The storage capacitor 140 is formed so that the drain electrode 110 which is electrically connected to the pixel electrode 122 overlaps a storage electrode 126 with the gate insulating layer 112 interposed therebetween. The storage electrode 126 is electrically connected to a storage line 124 and exemplary embodiments thereof may be formed of the same material as the gate line 102 on the lower substrate 101. The gate insulating layer 112 is formed having a first thickness d1 on the storage electrode 126 so as to cover side and top surfaces thereof and having a second thickness d2 throughout the remaining area.

By insulating the storage electrode 126 and the drain electrode 110 using the relatively thin first thickness d1 of the gate insulating layer 112, wherein the first thickness d1 is in inverse proportion to capacitance of the storage capacitor 140, capacitance of the storage capacitor 140 may be relatively increased. Since capacitance of the storage capacitor 140 becomes increasingly large without increasing the surface areas of the storage electrode 126 and the drain electrode 110, which constitute the exemplary embodiment of a storage capacitor 140 in accordance with the present invention, reduction in an aperture ratio may be prevented. The capacitance of the storage capacitor 140 may be increased without increasing the surface area thereof, thereby negating the need to impinge on the surface area used to transmit light to display an image.

As capacitance of the storage capacitor Cst becomes increasingly large, the exemplary embodiment of a TFT substrate in accordance with the present invention may reduce generation of a inflection point in a curve of time vs. brightness, thereby reducing a delay in response time due to generation of the inflection point. In one exemplary embodiment a ratio (Cst/Clc) of capacitance Cst of the storage capacitor to capacitance Clc of the liquid crystal is about 0.3 to about 0.6.

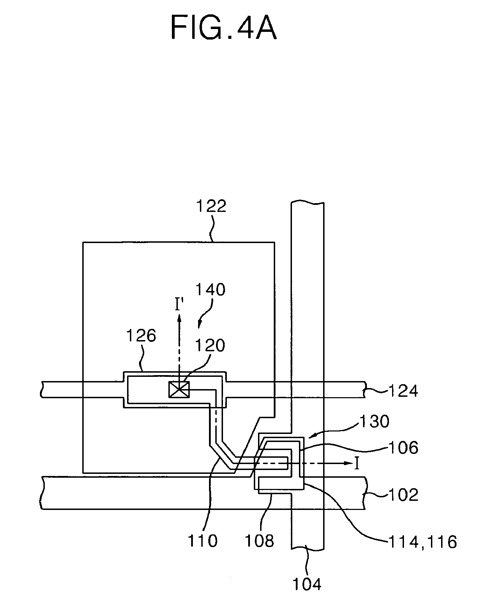

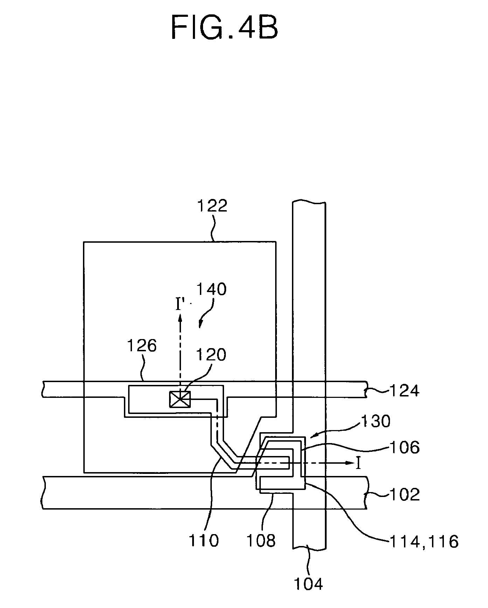

Specifically, since an overlapping area between the storage electrode and the drain electrode constituting the storage capacitor Cst of FIG. 2 is wide relative to the storage capacitor Cst of FIGS. 4A and 4B having the gate insulating layer of the first and second thicknesses d1 and d2 like the storage capacitor Cst of FIG. 2, capacitance of the storage capacitor Cst is large. In this case, a ratio of capacitance of the storage capacitor Cst of FIG. 2 to capacitance of the liquid crystal capacitor Clc is about 0.5; a ratio of capacitance of the storage capacitor Cst of FIG. 4A to capacitance of the liquid crystal capacitor Clc is about 0.402, and a ratio of capacitance of the storage capacitor Cst of FIG. 4B to capacitance of the liquid crystal capacitor Clc is about 0.321. Herein, an aperture ratio becomes large in the order of FIG. 2, FIG. 4A, and FIG. 4B. Meanwhile, since a ratio (Cst/Clc) of capacitance of the storage capacitor Cst to capacitance of the liquid crystal capacitor Clc varies based on a response time, etc., it should be noted that the ratio is not limited thereto.

By intersecting the gate line 102 and the data line 104 with the gate insulating layer 112 of the second thickness d2 interposed therebetween, the exemplary embodiment of a TFT substrate in accordance with the present invention may prevent or effectively reduce an increase in a parasitic capacitance between the gate line 102 and the data line 104 and the associated increase in power consumption due to the increase in the parasitic capacitance.

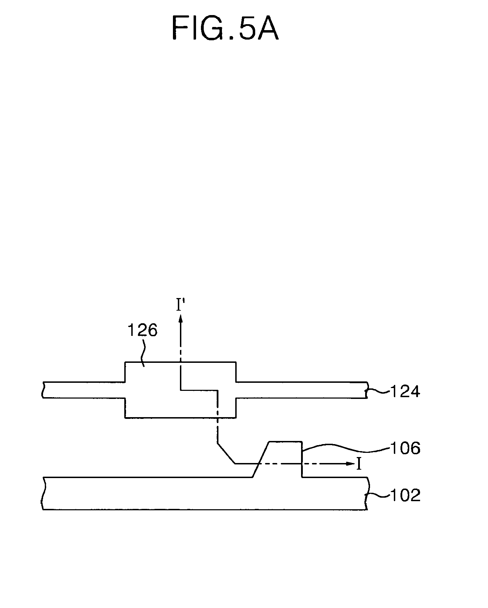

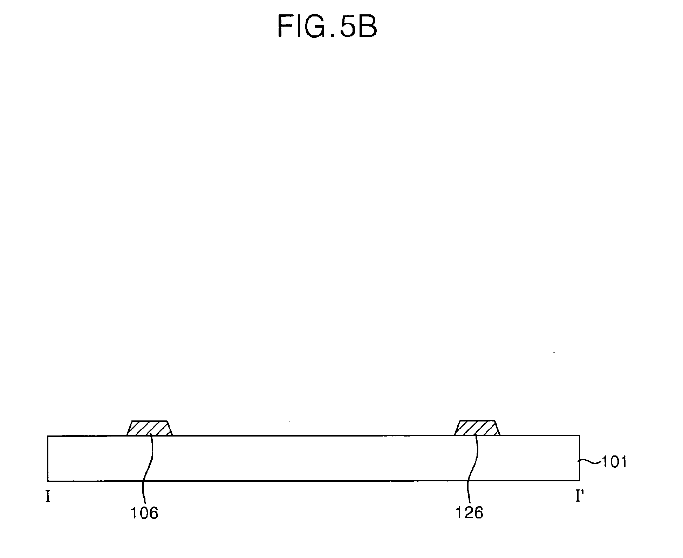

FIGS. 5 to 10 are top plan views and cross-sectional views illustrating an exemplary embodiment of a method of manufacturing an exemplary embodiment of a TFT substrate in accordance with the present invention.

As shown in FIGS. 5A and 5B, a gate metal pattern, which includes the gate line 102, the gate electrode 106 electrically connected to the gate line 102, the storage line parallel to the gate line 102, and the storage electrode 126 electrically connected to the storage line 124, is formed on the lower substrate 101.

Exemplary embodiments of the gate metal layer may be formed on the lower substrate 101 by a deposition method, exemplary embodiments of which include a sputtering method, a chemical vapor deposition method, or various other similar methods. Exemplary embodiments of the gate metal layer may be made of a single layer of a metal material, exemplary embodiments of which include, Mo, Ti, Cu, aluminum neodymium ("AINd"), Al, Cr, Mo alloy, Cu alloy, Al alloy, or other similar materials. Alternative exemplary embodiments include the configuration wherein the gate metal layer has a multi-layered structure of two or more layers. The gate metal layer is then patterned by a photolithography process and an etching process to form a gate metal pattern including the gate line 102, the gate electrode 106, the storage line 124, and a storage electrode 126.

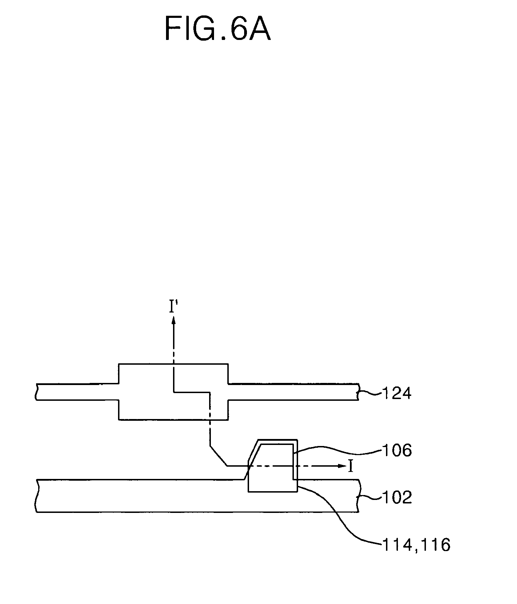

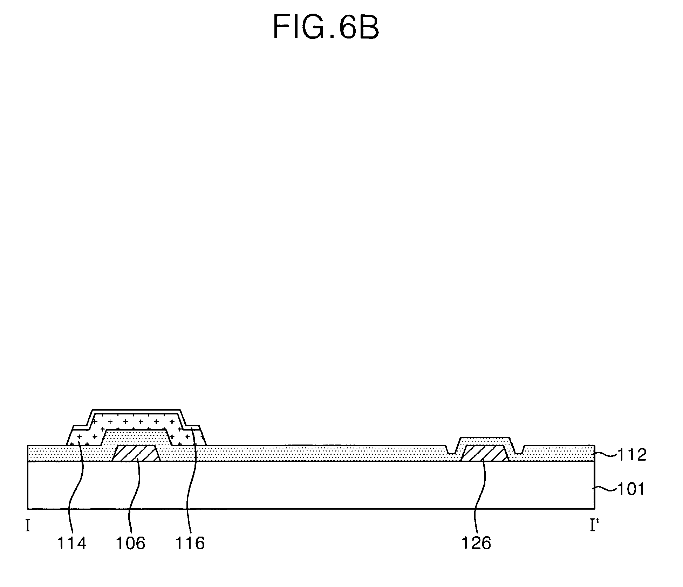

As shown in FIGS. 6A and 6B, the gate insulating layer 112 is formed on the gate metal pattern on the lower substrate 101, and then a semiconductor pattern including the active layer 114 and the ohmic contact layer 116 is formed on the gate insulating layer 112. The gate insulating layer 112, the active layer 114 and the ohmic contact layer 116 are then patterned by a photolithography process and an etching process.

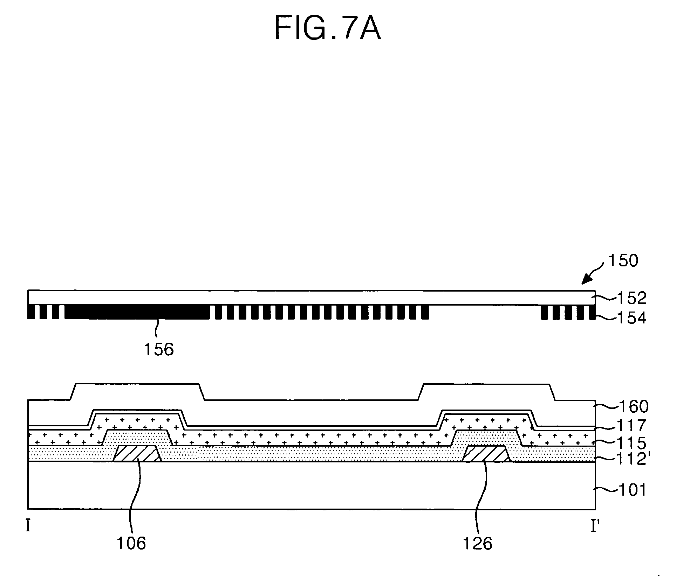

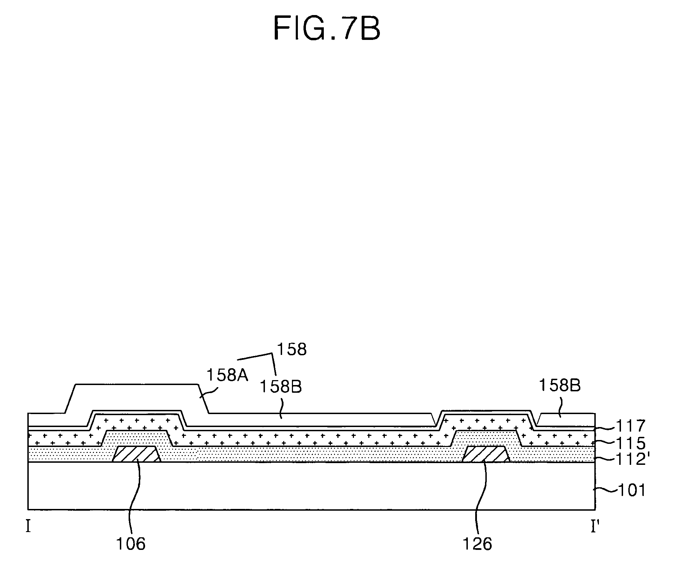

The photolithography process and etching process are shown in more detail in FIGS. 7A through 7G. In FIG. 7A, the gate insulating layer precursor 112', an amorphous silicon layer 115, and an impurity (n+ or p+) doped amorphous silicon layer 117 are sequentially deposited on the gate metal pattern of the lower substrate 101. Exemplary embodiments of the gate insulating layer 112, the amorphous silicon layer 115, and the impurity doped amorphous silicon layer 117 are formed by a plasma enhanced chemical vapor deposition ("PECVD") method. Exemplary embodiments of the gate insulating layer 112 may be made of an inorganic insulating material, exemplary embodiments of which include silicon oxide ("SiOx"), silicon nitride ("SiNx"), or other similar substances. A photoresist 160 is deposited on the impurity doped amorphous silicon layer 117, and then a half-tone mask or a slit mask 150 is aligned above the gate metal pattern. Exemplary embodiments of the slit mask 150 comprises a transparent substrate 152, exemplary embodiments of which include quartz, a blocking layer 156 formed thereon, exemplary embodiments of which may be formed of a metal layer such as Cr, CrOx, or other similar materials, , and a slit 154 for diffraction exposure. The photoresist 160 is exposed and developed by a photolithography process using the slit mask 150 and thus a photoresist pattern 158 of a stepped structure is formed, as shown in FIG. 7B. The exemplary embodiment of a photolithography process described below utilizes a positive photoresist 160, however alternative exemplary embodiments include configurations wherein the photoresist may be of a negative type.

The blocking layer 156 is located at an area where a semiconductor pattern will be formed and blocks ultraviolet rays from penetrating to that area, thereby a first photoresist pattern 158A remains in that area after development. The slit for diffraction exposure 154 is located at an area where the gate insulating layer precursor 112' will remain unchanged and diffracts ultraviolet rays from fully penetrating that area, thereby a second photoresist pattern 158B, which is thinner than the first photoresist pattern 158A due to its partial exposure, remains after development. A transmitting portion of the slit mask, where there is no light blocking layer 156 or slit 154, transmits all of the ultraviolet rays, thereby the photoresist in this region is removed after development.

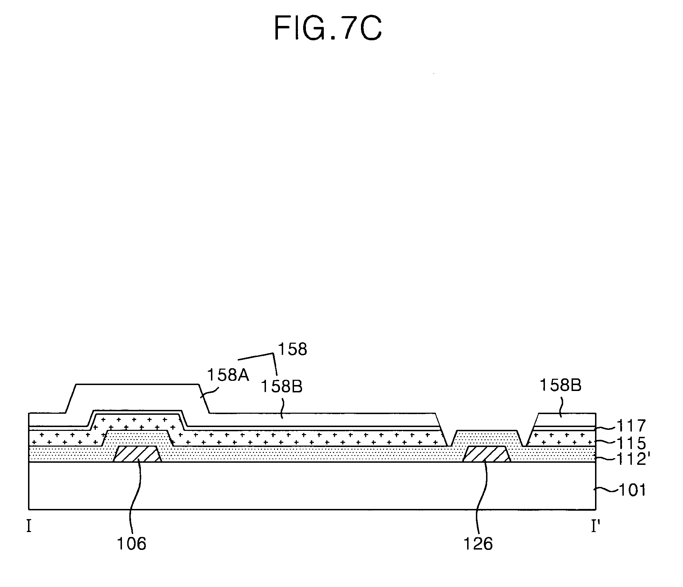

As shown in FIG. 7C, the amorphous silicon layer 115 and the impurity (n+ or p+) doped amorphous silicon layer 117 are patterned by an etching method using the photoresist pattern 158 having a stepped structure. At this point in the exemplary embodiment of a method of manufacturing the gate insulating layer and the semiconductor pattern, the amorphous silicon layer 115 and the impurity doped amorphous silicon layer 117 are formed on the gate insulating layer precursor 112' except for the storage electrode 126 so as to expose the gate insulating layer precursor 112' formed on the storage electrode 126.

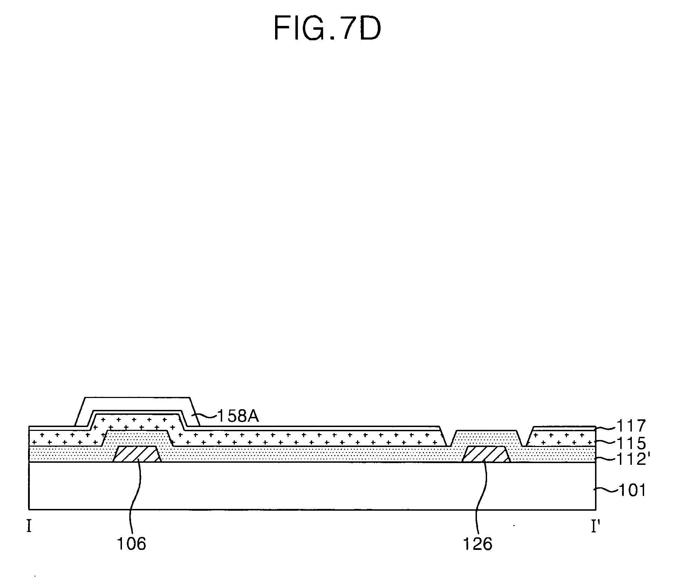

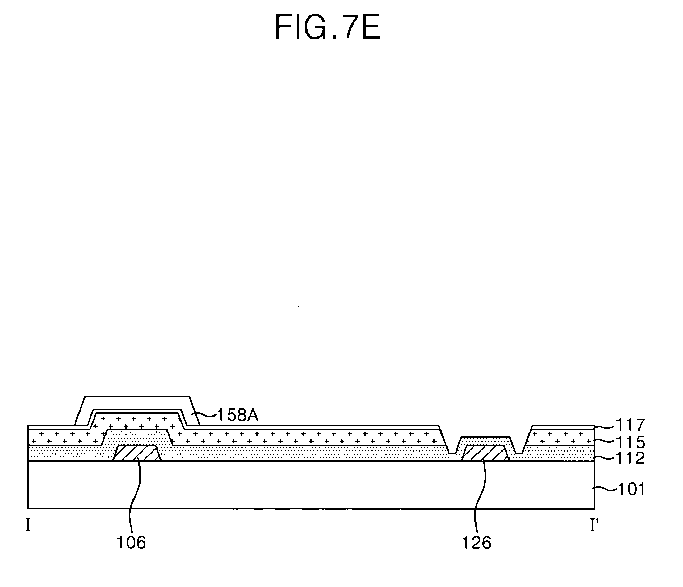

Then, as shown in FIG. 7D, the photoresist pattern 158 is ashed by an ashing process using O₂ plasma, thereby removing the second photoresist pattern 158B and reducing the thickness of the photoresist pattern 158A. Further, the gate insulating layer precursor 112' formed on the storage electrode 126 is exposed by the amorphous silicon layer 115 and the impurity doped amorphous silicon layer 117 is partially etched by an etching process using the amorphous silicon layer 115 and the impurity doped amorphous silicon layer 117 as a mask to form the gate insulating layer 112. This partial etching process reduces the thickness of the insulating layer precursor 112' formed on the storage electrode 126 as shown in FIG. 7E. Alternative exemplary embodiments of a method of manufacturing the gate insulating layer and the semiconductor pattern may reverse the order of the etching process for the gate insulating layer 112 of FIG. 7E and an ashing process of FIG. 7D.

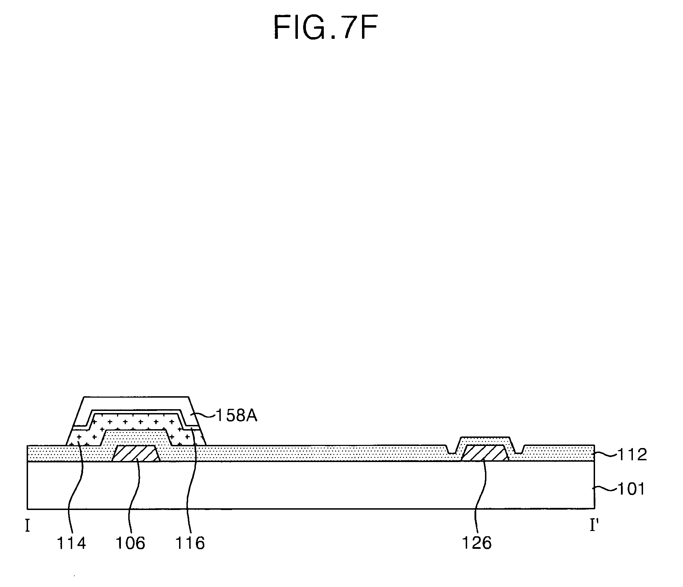

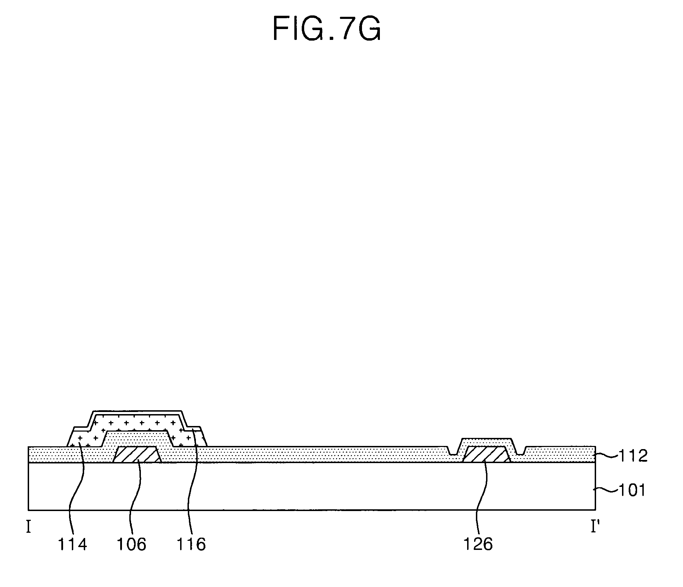

Then, parts of the amorphous silicon layer 115 and the impurity doped amorphous silicon layer 117 which are not covered by the ashed first photoresist pattern 158A are removed by an etching process. The remaining amorphous silicon layer 115 and impurity doped amorphous silicon layer 117 overlap the gate electrode 106, as shown in FIG. 7F to form the active layer 114 and the ohmic contact layer 116. Then, the first photoresist pattern 158A remaining on the active layer 114 and the ohmic contact layer 116 is removed as shown in FIG. 7G. One exemplary embodiment of the method of removing the photoresist pattern 158A is through a strip process. An exemplary embodiment of the gate insulating layer and semiconductor pattern are formed by the above described exemplary method.

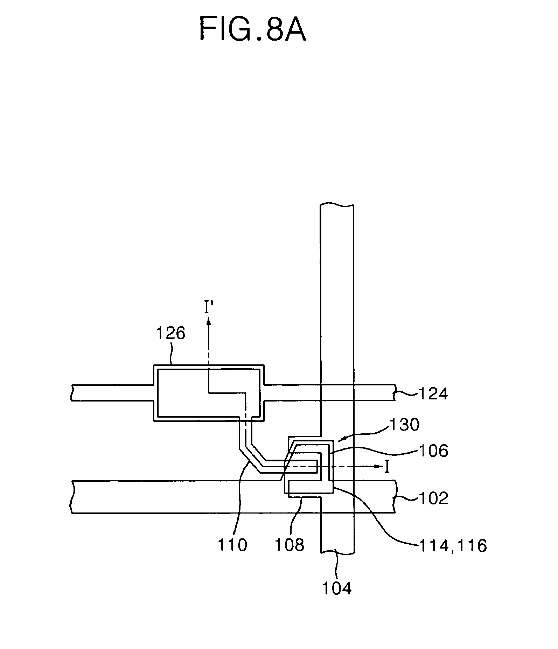

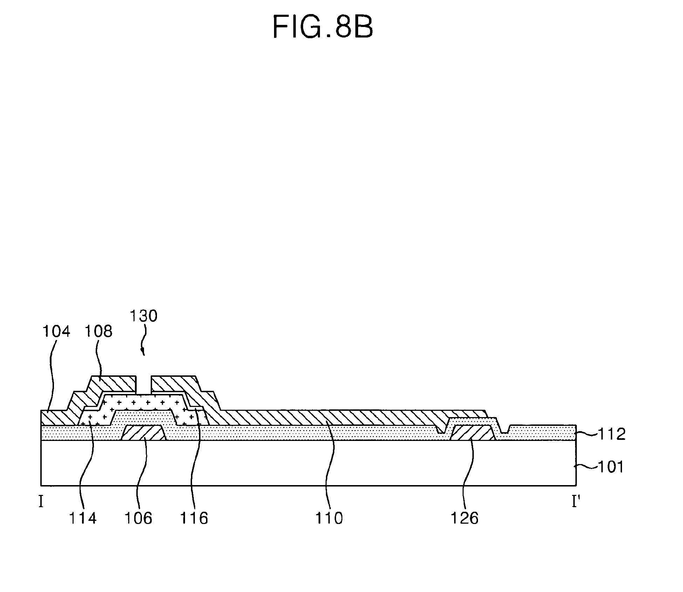

As shown in FIGS. 8A and 8B, exemplary embodiments of the source/drain metal patterns including the data line 104, the source electrode 108, and the drain electrode 110 are formed on the lower substrate 101 corresponding to the semiconductor pattern.

The source/drain metal layer is formed on the lower substrate 101 corresponding to the semiconductor pattern. Exemplary embodiments of the source/drain metal layer use a single layer of a metal material, exemplary embodiments of which include Cr, W, Mo, Ti, or other similar materials, or a multilayered structure of two or more layers. Then, the source/drain metal layer is patterned to form the source/drain metal patterns including the data line 104, the source electrode 108, and the drain electrode 110. One exemplary embodiment of the patterning method is by a photolithography process and an etching process.

The ohmic contact layer 116 is then etched by an etching process using the source and drain electrodes 108, 110, as a mask to expose the active layer 114 in a channel area of the TFT 130.

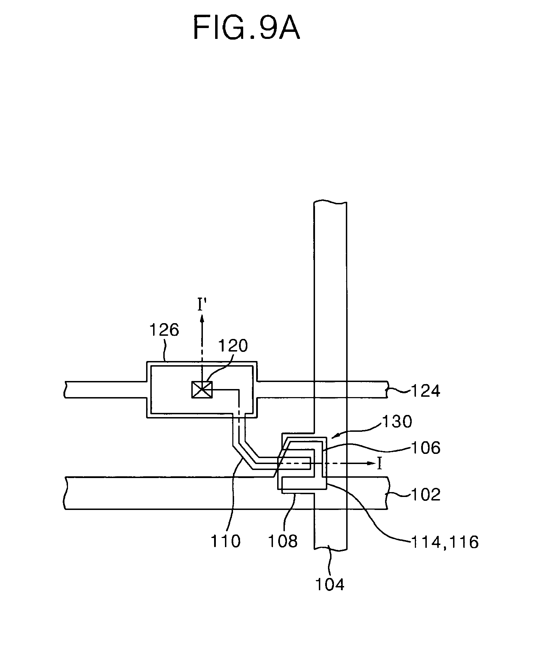

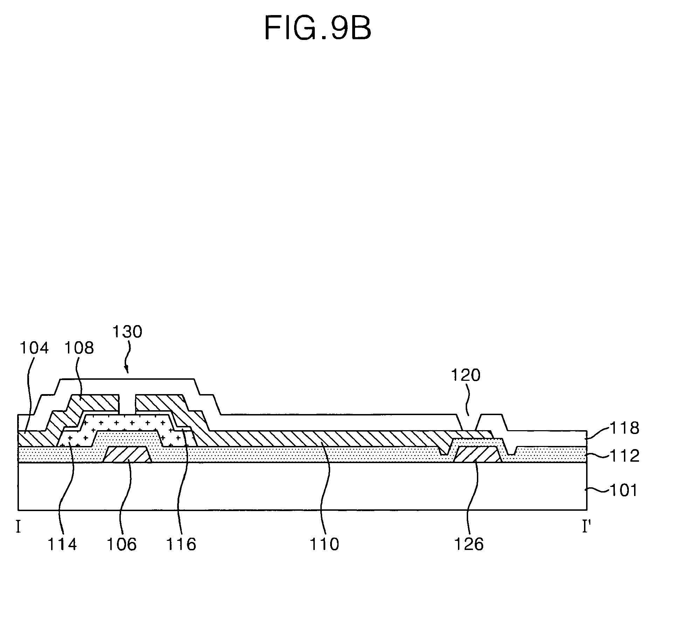

As shown in FIGS. 9A and 9B, the passivation layer 118 including the contact hole 120 is formed on the lower substrate 101 where the source/drain metal patterns are formed.

Exemplary embodiments of the passivation layer 118 may be formed by a PECVD method, a spin coating method, a spinless coating method, or other similar methods on the gate insulating layer 112 where the source/drain metal patterns are formed. Exemplary embodiments of the passivation layer 118 may use the same inorganic material as the gate insulating layer 112, or an acryl-based organic compound, or an organic material, such as benzocyclobutene ("BCB") or perfluorocyclobutane ("PFCB"), or other similar materials. The passivation layer 118 is patterned to form the contact hole 120. Exemplary embodiments of the passivation layer 118 patterning may be performed by a photolithography process and an etching process. The contact hole 120 penetrates the passivation layer 118 to expose the drain electrode 110.

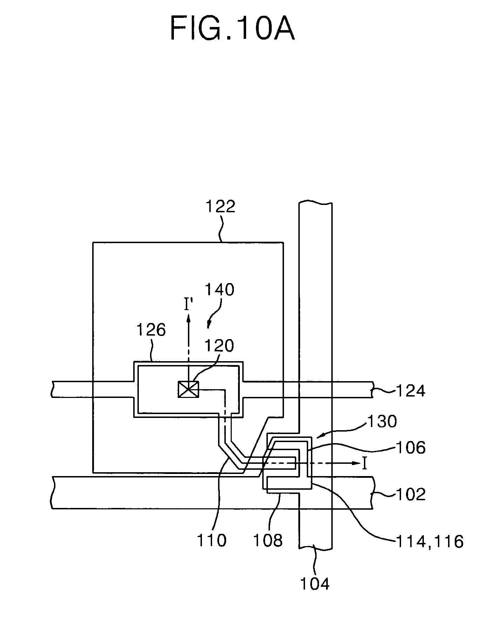

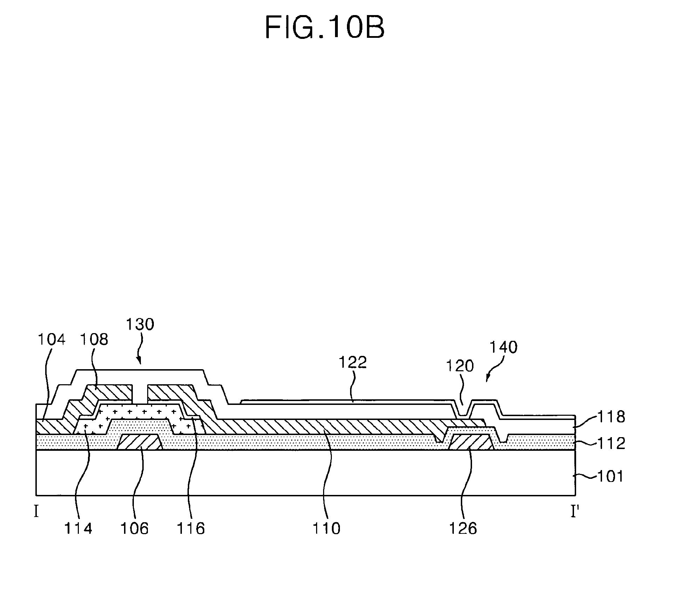

As shown in FIGS. 10A and 10B, a transparent conductive pattern including the pixel electrode 122 is formed on the lower substrate 101 corresponding to the passivation layer 118.

Specifically, the transparent conductive layer is deposited on the surface by a deposition method, exemplary embodiments of which include a sputtering method, and other similar methods so as to cover the passivation layer 118. Exemplary embodiments of the transparent conductive layer use indium tin oxide ("ITO"), tin oxide ("TO"), indium zinc oxide ("IZO"), indium tin zinc oxide ("ITZO"), and other similar materials. The transparent conductive layer is then patterned, exemplary embodiments of the patterning process include a photolithography process and an etching process, to form transparent conductive patterns including the pixel electrode 122.

While in the above exemplary embodiments the storage and drain electrodes of the storage capacitor overlap one another with the gate insulating layer interposed therebetween, it should be noted that in alternative exemplary embodiments they may overlap with the passivation layer interposed therebetween. In such alternative exemplary embodiments, the passivation layer is formed having a relatively thin thickness at an area interposed between the storage and drain electrodes of the storage capacitor and formed having a relatively thick thickness at a remaining area.

As described the above, according to the exemplary embodiments of an LCD panel and the method of manufacturing the LCD panel according to the present invention, the storage and drain electrodes of the storage capacitor overlap with a relatively thin thickness of a gate insulating layer interposed therebetween, thereby relatively increasing capacitance of the storage capacitor. Accordingly, when a voltage applied to a liquid crystal varies, generation of an inflection point appearing on a curve of time vs. brightness may be reduced and thus delay of a response time due to generation of the inflection point may be prevented.

Further, according to the exemplary embodiments of an LCD panel and the method of manufacturing the LCD panel according to the present invention, since capacitance of the storage capacitor increases without an increase in an area of the storage and drain electrodes of the storage capacitor, a reduction in an aperture ratio may be prevented.

Further, according to the exemplary embodiments of an LCD panel and the method of manufacturing the LCD panel according to the present invention, a thickness of the insulating layer at a particular area becomes locally thin while allowing other areas of the insulating layer to maintain thickness as necessary. As an example, voltage loads of the data and gate lines may be reduced by thickening a thickness of the insulating layer at an intersecting area of the data and gate lines and reducing a parasitic capacitor therebetween. In particular, a reduction in the parasitic capacitor between the data and gate lines may cause a reduction of power consumption. This effect is due to the fact that most of the electric current consumed in an LCD panel is determined by the capacitor of the data line.

While this invention has been described in connection with what is presently considered to be practical exemplary embodiments, it is to be understood that the present invention is not limited to the disclosed exemplary embodiments, but, on the contrary, is intended to cover various modifications and equivalent arrangements included within the spirit and scope of the appended claims.

## Claims

1. A method of manufacturing a liquid crystal display panel, the method comprising:
forming a storage electrode on a substrate;
forming a gate electrode on the substrate;
forming a gate insulating layer on the storage electrode and the substrate uncovered by the storage electrode, wherein the thickness of the gate insulating layer is thinner on the storage electrode than the thickness of the gate insulating layer on the substrate uncovered by the storage electrode;
forming a semiconductor pattern on the gate insulating layer;
forming a source electrode on the semiconductor pattern;
forming a drain electrode opposing the source electrode on the semiconductor pattern, wherein the drain electrode overlaps the storage electrode to form a storage capacitor;
forming a passivation layer on the source electrode and drain electrode, wherein the passivation layer has a contact hole which exposes the drain electrode; and
forming a pixel electrode on the passivation layer, wherein the passivation layer is connected to the drain electrode via the contact hole.

2. The method of claim 1, wherein the storage capacitor is formed to have a capacitance wherein a ratio of capacitance of the storage capacitor to the capacitance of a liquid crystal layer is about 0.3 to about 0.6.

3. The method of claim 1, wherein the forming of the gate insulating layer and the semiconductor pattern comprises:
forming the gate insulating layer on the substrate, the gate electrode and the storage electrode;
depositing a first silicon layer and a second silicon layer on the gate insulating layer;
forming a photoresist pattern which has a different thickness according to its location on the second silicon layer;
patterning the first and second silicon layers using the photoresist pattern;
etching an upper part of the gate insulating layer on the storage electrode;
removing a portion of the photoresist pattern by ashing the photoresist pattern;
removing the first and second silicon layers where the photoresist pattern is removed; and
removing the remaining photoresist pattern.

4. The method of claim 1, wherein the forming of the gate insulating layer and the semiconductor pattern comprises:
forming the gate insulating layer on the substrate, the gate electrode and the storage electrode;
depositing first and second silicon layers on the gate insulating layer;
forming a photoresist pattern which has a different thickness according to its location on the second silicon layer;
patterning the first and second silicon layers using the photoresist pattern;
removing a portion of the photoresist pattern by ashing the photoresist pattern;
etching an upper part of the gate insulating layer on the storage electrode;
removing the first and second silicon layers where the photoresist pattern is removed; and
removing the photoresist pattern.

5. The method of claim 1, wherein the forming of the gate insulating layer on the storage electrode and the substrate, wherein the thickness of the gate insulating layer is thinner on the storage electrode than the thickness on the substrate, comprises forming the gate insulating layer to be thicker between the gate and data lines than between two electrodes of the storage capacitor.

6. A liquid crystal display panel comprising:
a thin film transistor formed on a substrate;
a liquid crystal capacitor connected to the thin film transistor;
a storage capacitor connected to the liquid crystal capacitor, wherein the storage capacitor maintains a voltage charged in the liquid crystal capacitor; and
a dielectric layer formed on the substrate, wherein the thickness of the dielectric layer is thinner between two electrodes of the storage capacitor than the thickness of the dielectric layer on a portion of the substrate uncovered by the storage capacitor.

7. The liquid crystal display panel of claim 6, wherein a ratio of the capacitance of the storage capacitor to the capacitance of the liquid crystal capacitor is about 0.3 to about 0.6.

8. The liquid crystal display panel of claim 6, wherein the dielectric layer is a gate insulating layer disposed between a gate line and a data line.

9. The liquid crystal display panel of claim 8, wherein the gate insulating layer has a thickness which is thicker between the gate line and the data line than between the two electrodes of the storage capacitor.

10. The liquid crystal display panel of claim 8, wherein the storage capacitor comprises a storage electrode and a drain electrode with the gate insulating layer interposed therebetween.

11. The liquid crystal display panel of claim 10, wherein the storage electrode is made of substantially the same material as a gate electrode.
